# EUROPÄISCHE PATENTSCHRIFT

(11) **EP 3 040 842 B1**
(45) Veröffentlichungstag und Bekanntmachung des Hinweises auf die Patenterteilung: **07.08.2019**
(21) Anmeldenummer: 15150033.7
(22) Anmeldetag: 02.01.2015
(51) Int. Cl.: B60K 37/06, G06F 3/0488, G06F 3/0484, G06F 3/03, G06F 3/01, B60K 35/00

(54) **Anwenderschnittstelle und Verfahren zur hybriden Nutzung einer Anzeigeeinheit eines Fortbewegungsmittels**
User interface and method for hybrid use of a display unit of a means of locomotion
Interface utilisateur et procédé destiné à l'utilisation hybride d'une unité d'affichage d'un moyen de locomotion

(43) Veröffentlichungstag der Anmeldung: 06.07.2016
(73) Patentinhaber: Volkswagen AG, 38436 Wolfsburg (DE)
(72) Erfinder: WILD, Holger, 10179 Berlin (DE); KÖTTER, Nils, 38126 Braunschweig (DE)
(74) Vertreter: Hoefer & Partner Patentanwälte mbB

(56) Entgegenhaltungen:
- EP-A2- 2 808 775
- DE-A1-102005 011 094
- DE-A1-102007 039 445
- DE-A1-102009 023 447
- DE-A1-102009 051 202
- DE-A1-102010 055 132
- US-A1- 2011 187 675

## Beschreibung

### Stand der Technik

Die vorliegende Erfindung betrifft ein Fahrzeug, eine Anwenderschnittstelle sowie ein Verfahren zur mehrfachen ("hybriden") Nutzung einer Anzeigeeinheit eines Fortbewegungsmittels. Insbesondere betrifft die vorliegende Erfindung eine Verwendung einer Anzeigeeinheit zur Anzeige von Armaturen und Bedienelementen in Abhängigkeit eines Betriebszustandes.

Im Stand der Technik sind Annäherungsgesten zur Modifikation einer Anzeigeeinheit eines Fortbewegungsmittels bekannt. Beispielsweise werden in Abhängigkeit einer Annäherungsgeste zusätzliche Bedienelemente angezeigt, welche einer jeweiligen Kachel (Fenster oder Informationseinheit) auf der Anzeigeeinheit zugeordnet sind. Über die Bedienelemente kann der Anwender Inhalte der Kachel oder eine Erscheinungsform der Kachel modifizieren. Außerdem sind im Stand der Technik in Software ausgeführte Armaturen bekannt, welche auf einem Bildschirm eines Fortbewegungsmittels angezeigt werden, um einem Anwender Informationen über den Betriebszustand des Fahrzeuges oder andere Daten und Messwerte anzuzeigen.

DE 10 2010 055 132 A1 offenbart ein Kombiinstrument, auf welchem in Abhängigkeit einer Anwenderinteraktion Abbildungen eines Hardware-Bedienelements in Form einer Lenkradtaste eingeblendet werden.

DE 10 2007 039 445 A1 offenbart eine in Fahrzeugen des Volkswagenkonzerns seit einiger Zeit realisierte Möglichkeit, über eine Annäherungsgeste von einem Anzeige- in einen Bedienmodus einer Anwenderschnittstelle zu wechseln. Hierbei werden identischen Anwendungsumfängen zugeordnete Anzeigeelemente im Ansprechen auf die Annäherung durch Schaltflächen ergänzt.

EP 2 808 775 A2 offenbart eine Anwenderschnittstelle für ein Fahrzeug, in welchem eine Annäherungssensorik zur Erkennung einer Annäherung durch den Anwender vorgeschlagen wird. Im Ansprechen auf eine Annäherung wird eine Bildschirmaufteilung modifiziert.

DE 10 2009 051 202 A1 offenbart eine Bedienvorrichtung mit einer Annäherungserkennung. Im Ansprechen auf eine Annäherung durch den Anwender werden Schaltflächen auf einer Anzeigeeinrichtung vergrößert dargestellt, um die Bedienergonomie zu verbessern.

US 2011/0187675 A1 offenbart eine Anwenderschnittstelle mit Annäherungserkennung und einer berührungsempfindlichen Eingabefläche. Im Ansprechen auf eine vordefinierte Art der Annäherung wird die Empfindlichkeit der berührungsempfindlichen Eingabefläche erhöht. Gemäß einem Ausführungsbeispiel werden im Ansprechen auf die Annäherung zusätzliche Schaltflächen dargestellt.

DE 10 2009 023447 A1 offenbart eine Anwenderschnittstelle eines Fortbewegungsmittels mit einer berührungsempfindlichen ersten Anzeigeeinheit sowie einer zweiten Anzeigeeinheit, die in einen Energiesparmodus versetzt werden kann.

Ausgehend vom vorstehend identifizierten Stand der Technik ist es eine Aufgabe der vorliegenden Erfindung, eine Anwendereinheit eines Fortbewegungsmittels flexibel und in Abhängigkeit eines Anwenderbedürfnisses zu nutzen.

### Offenbarung der Erfindung

Die vorstehend identifizierte Aufgabe wird erfindungsgemäß durch eine Anwenderschnittstelle und ein Verfahren zur hybriden ("mehrfachen") Nutzung einer Anwendereinheit eines Fortbewegungsmittels gelöst. Die Anwendereinheit kann beispielsweise ein Bildschirm sein, auf welchem wahlfreie Inhalte dargestellt werden können. Das Fortbewegungsmittel kann beispielsweise als PKW, als Transporter, als LKW, als Luft- und/oder Wasserfahrzeug ausgestaltet sein. In einem ersten Schritt erfolgt ein Anzeigen von Anzeigeelementen auf einer zweiten Anzeigeeinheit. In einem zweiten Schritt erfolgt ein Versetzen der zweiten Anzeigeeinheit in einen Zustand verringerter Energieaufnahme. In einem dritten Schritt erfolgt ein Entfernen der Anzeigeelemente von der zweiten Anzeigeeinheit. In einem vierten Schritt wird eine Vielzahl von Anzeigeelementen repräsentierend einen ersten Informationsumfang auf der ersten berührungsempfindlichen Anzeigeeinheit angezeigt. Die Anzeigeelemente seien ausdrücklich nicht zur Entgegennahme von Anwendereingaben eingerichtet und können daher als "Armaturen" verstanden werden. Beispielsweise können die Anzeigeelemente eine Zeit, eine aktuelle Beschleunigung des Fortbewegungsmittels, eine Himmelsrichtung, eine Geschwindigkeit, eine Lastverteilung auf Räder des Fortbewegungsmittels o. ä. darstellen. In einem fünften Schritt wird eine Annäherung eines Anwenders an die erste berührungsempfindliche Anzeigeeinheit erfasst. Dies kann beispielsweise über eine Infrarot-LED-Leiste erfolgen, wie sie im Stand der Technik grundsätzlich zur Erfassung von Annäherungsgesten bekannt ist. Unter einer "Annäherung" wird im Rahmen der vorliegenden Erfindung insbesondere eine solche Geste des Anwenders verstanden, welche vollständig ohne Kontakt zu einer berührungsempfindlichen Oberfläche der ersten berührungsempfindlichen Anzeigeeinheit erfolgt. Im Ansprechen auf die erfasste Annäherungsgeste wird ein Bedienelement oder eine Vielzahl von Bedienelementen repräsentierend Funktionsumfänge anstelle der Anzeigeelemente angezeigt. Mit anderen Worten wird das Anzeigeelement beziehungsweise die Vielzahl zuvor angezeigter Anzeigeelemente nach einem vollständigen Anzeigen der Bedienelemente nicht mehr angezeigt. Der durch die Anzeigeelemente repräsentierte Informationsumfang wird somit durch den durch die Bedienelemente repräsentierten Funktionsumfang ersetzt. Die Bedienelemente dienen im Gegensatz zu den Anzeigeelementen zur Entgegennahme von Anwenderinteraktionen, welche sich auf einen durch die Bedienelemente repräsentierten Funktionsumfang auswirken. Die Bedienelemente können beispielsweise zur Veränderung von Klima- und/oder Sitzeinstellungen vorgesehen sein. Somit kann der Anwender bei einer Annäherung die erste berührungsempfindliche Anzeigeeinheit nutzen, um Einfluss auf den Funktionsumfang der Bedienelemente nehmen zu können. Auf diese Weise kann die erste berührungsempfindliche Anzeigeeinheit für unterschiedliche Informations- beziehungsweise Funktionsumfänge verwendet werden. Dies kann insbesondere dann von Vorteil sein, falls eine Anwenderschnittstelle des Fortbewegungsmittels in einem Betriebszustand ist, in welchem eine zusätzliche Anzeigeeinheit derzeit außer Betrieb ist.

Gemäß einem zweiten Aspekt der vorliegenden Erfindung wird eine Anwenderschnittstelle zur mehrfachen Nutzung einer ersten berührungsempfindlichen Anzeigeeinheit eines Fortbewegungsmittels vorgeschlagen. Die Anwenderschnittstelle umfasst eine erste berührungsempfindliche Anzeigeeinheit, welche eingerichtet ist, Anzeigeelemente repräsentierend einen ersten Informationsumfang anzuzeigen. Zudem ist eine Erfassungseinheit vorgesehen, welche eingerichtet ist, eine Annäherung eines Anwenders an die erste berührungsempfindliche Anzeigeeinheit und/oder die Erfassungseinheit zu erfassen. Eine Auswerteeinheit der Anwenderschnittstelle ist eingerichtet, im Ansprechen auf eine mittels der Erfassungseinheit erfasste Annäherung des Anwenders Bedienelemente eines Funktionsumfangs anstelle der Anzeigeelemente repräsentierend den Informationsumfang auf der ersten berührungsempfindlichen Anzeigeeinheit anzuzeigen. Mit anderen Worten ist die erfindungsgemäße Anwenderschnittstelle eingerichtet, ein Verfahren gemäß dem erstgenannten Erfindungsaspekt auszuführen. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

Das Verfahren sowie die Anwenderschnittstelle verwendet beziehungsweise umfasst eine zweite Anzeigeeinheit beziehungsweise eine zweite Anzeigeeinheit, welche eingerichtet ist, in einen Energiesparmodus versetzt zu werden. Der Energiesparmodus kann auch als Verdunklungsmodus verstanden werden, welchen der Anwender beispielsweise wahlfrei aktivieren kann. Dies kann zur Verringerung von Lichtemissionen im Fahrgastraum bei Nachtfahrten von Vorteil sein. Außerdem können Anwender, welche mit modernen Anwenderschnittstellen nicht vertraut sind, durch eine verringerte Anzeigefläche weniger Berührungsängste bezüglich der Anwenderschnittstelle empfinden.

Die Unteransprüche haben bevorzugte Weiterbildungen der Erfindung zum Inhalt.

Bevorzugt kann die Anzeigeeinheit einem in einem Energiesparmodus befindlichen bzw. in einen Energiesparmodus überführbaren Primärbildschirm zugeordnet sein, welcher beispielsweise größer als die Anzeigeeinheit der oben genannten Erfindungsaspekte ist. Auf dem Primärbildschirm können die Anzeigeelemente bei einem Wechsel in einen Betriebsmodus mit höherer Energieaufnahme automatisch transferiert werden. Mit anderen Worten wird bei einer erfassten Annäherung des Anwenders das Anzeigeelement beziehungsweise die Vielzahl Anzeigeelemente auf dem Primärbildschirm anstatt auf der Anzeigeeinheit angezeigt. Alternativ oder zusätzlich kann nach Verstreichen einer vordefinierten Zeitdauer nach einem Entfernen des Anwenders von der Anzeigeeinheit beziehungsweise von der Erfassungseinheit das Anzeigeelement beziehungsweise die Anzeigeelemente vom Primärbildschirm entfernt und erneut auf der Anzeigeeinheit dargestellt werden und hierbei die Bedienelemente letztendlich vollständig ersetzen.

Der Informationsumfang der Anzeigeelemente kann beispielsweise anderen Funktionen des Fortbewegungsmittels zugeordnet sein als der Funktionsumfang der Bedienelemente. Mit anderen Worten wird nicht lediglich eine bedienbare Variante der Anzeigeelemente nach erfasster Annäherung angezeigt, sondernes werden im Wesentlichen von den Anzeigeelementen thematisch unabhängige Bedienelemente angezeigt. Insbesondere wirken sich Anwendereingaben mittels der Bedienelemente nicht auf den von den Anzeigeelementen repräsentieren Informationsumfang aus.

Die Anzeigeelemente können beispielsweise einer Kompassfunktion und/oder einer Temperaturanzeige (Außentemperatur und/oder Innenraumtemperatur, Fahrerseite und/oder Beifahrerseite, Sitzheizung, Lufttemperatur, Lenkradheizung etc.) und/oder einer Lastverteilung auf angetriebene Räder des Fortbewegungsmittels sein.

Die Bedienelemente können sich auf Anpassungen von Heiz-/Klimafunktionen beziehen, beispielsweise der Innenraumtemperatur (Fahrerseite und/oder Beifahrerseite), der Sitzheizung, der Lufttemperatur, der Lenkradheizung etc.), insbesondere jedoch von den vorgenannten Funktionen verschiedene Funktionen gelten für die Bedienelemente.

Die Bedienelemente können insbesondere Ein-/ Aus-Schaltflächen und/oder Inkrementier- und/oder Dekrementier-Schaltflächen und/oder Schieberegler etc. umfassen, welche sich auf für die Bedienelemente vordefinierte Funktionsumfänge beziehen.

Gemäß einem dritten Aspekt der vorliegenden Erfindung wird ein Computerprogrammprodukt vorgeschlagen, welches Instruktionen umfasst, welche, wenn sie auf einer Auswerteeinheit einer erfindungsgemäßen Anwenderschnittstelle ausgeführt werden, die Anwenderschnittstelle veranlassen, die Schritte eines Verfahrens gemäß dem erstgenannten Erfindungsaspekt auszuführen. Das Computerprogrammprodukt kann als CD, DVD, Blue-Ray-Disc, Flash-Speicher, Festplatte, RAM/ROM, Cache etc. ausgestaltet sein.

Gemäß einem vierten Aspekt der vorliegenden Erfindung wird eine Signalfolge repräsentierend Instruktionen vorgeschlagen, welche, wenn sie auf einer programmierbaren Auswerteeinheit einer Anwenderschnittstelle gemäß dem zweitgenannten Erfindungsaspekt ausgeführt werden, die Anwenderschnittstelle veranlassen beziehungsweise diese in die Lager versetzen, die Verfahrensschritte eines Verfahrens gemäß dem erstgenannten Erfindungsaspekt auszuführen. Auf diese Weise wird auch die informationstechnische Bereitstellung der Informationen für den Fall unter Schutz gestellt, dass sich die hierzu erforderlicher Speichermittel außerhalb des Geltungsbereiches der beigefügten Ansprüche befinden.

Gemäß einem fünften Aspekt der vorliegenden Erfindung wird ein Fortbewegungsmittel (z. B. ein PKW, ein Transporter, ein LKW, ein Motorrad, ein Luft- und/oder Wasserfahrzeug) vorgeschlagen, welches eine Anwenderschnittstelle gemäß dem zweitgenannten Erfindungsaspekt umfasst. Die Merkmale, Merkmalskombinationen und die sich aus diesen ergebenden Vorteile des dritt-, viert- und fünftgenannten Erfindungsaspektes ergeben sich entsprechend denjenigen, welche in Verbindung mit dem erstgenannten Erfindungsaspekt ausgeführt wurden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Prinzipskizze veranschaulichend Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine Veranschaulichung einer Anwenderinteraktion zur Aktivierung eines Ruhemodus' einer Anwenderschnittstelle;
- Figur 3: eine Veranschaulichung einer weiteren Anwenderinteraktion zur Aktivierung des Ruhemodus';
- Figur 4: eine Annäherung eines Anwenders an eine in einem Ruhemodus befindliche erfindungsgemäß ausgestaltete Anwenderschnittstelle;
- Figur 5: eine Annäherung eines Anwenders an eine in einem Ruhemodus befindliche erfindungsgemäß ausgestaltete Anwenderschnittstelle;
- Figur 6: das Ergebnis der in den Figuren 4 und 5 veranschaulichten Annäherung; und
- Figur 7: ein Flussdiagramm veranschaulichend Schritte eines Ausführungsbeispiels eines erfindungsgemäßen Verfahrens.

### Ausführungsformen der Erfindung

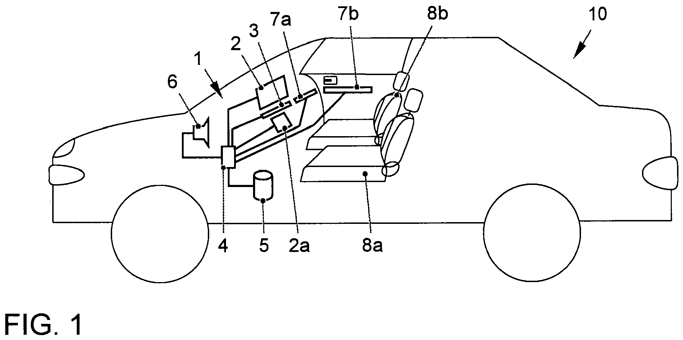

Figur 1 zeigt einen PKW 10 als Fortbewegungsmittel, in welchem ein Ausführungsbeispiel einer erfindungsgemäß ausgestalteten

Anwenderschnittstelle 1 vorgesehen ist. Einen zweiter Bildschirm 2 ist als Primärbildschirm und ein erster berührungsempfindlicher Bildschirm 2a ist als Anzeigeeinheit unterhalb des Primärbildschirms 2 angeordnet. Zwischen den Bildschirmen 2, 2a ist eine Fingerleiste 3 mit integrierter Annäherungssensorik als Erfassungseinheit zur Entgegennahme von Annäherungs- und Wischgesten vorgesehen. Ein elektronisches Steuergerät 4 ist als Auswerteeinheit vorgesehen und informationstechnisch mit den Bildschirmen 2, 2a und der Fingerleiste 3 sowie der Annäherungssensorik verbunden. Überdies sind ein Datenspeicher 5 und ein Lautsprecher 6 informationstechnisch mit dem elektronischen Steuergerät 4 verbunden. Im Datenspeicher 5 können Referenzen für Annäherungs- und/oder Wischgesten gespeichert sein. Über den Lautsprecher 6 können Quittier- und/oder Signaltöne und Sprachsignale ausgegeben werden. Zudem sind Ambientelichtleisten 7a und 7b in das Armaturenbrett beziehungsweise in die Türen des PKWs 10 eingelassen, welche über das elektronische Steuergerät 4 zur Ausschüttung von Licht angesteuert werden können. Ein Fahrersitz 8a und ein Beifahrersitz 8b sind zur Aufnahme eines Fahrers beziehungsweise eines Beifahrers als Anwender vorgesehen.

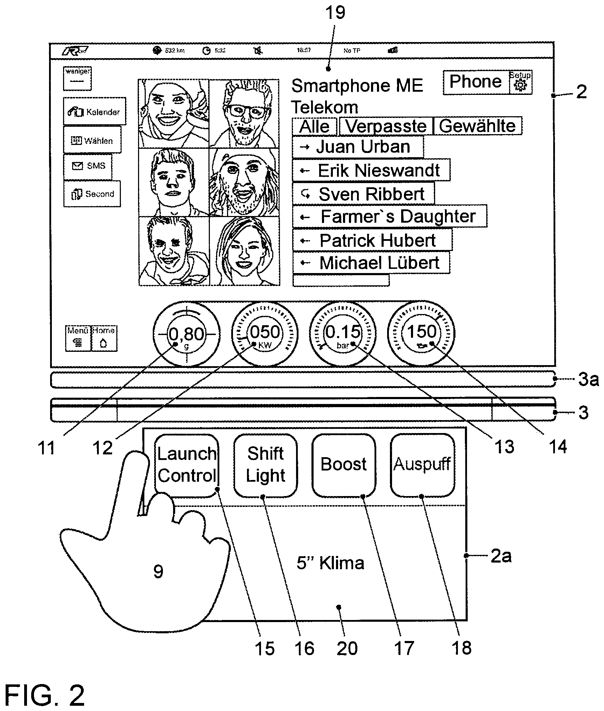

Figur 2 zeigt einen möglichen Bildschirminhalt 19 eines Primärbildschirmes 2 (englisch "Screenshot"), auf welchem in einem mittleren unteren Bereich vier Anzeigeelemente 11, 12, 13, 14 repräsentierend eine aktuelle Beschleunigung des Fortbewegungsmittels beziehungsweise eine aktuelle Leistungsabgabe des Fortbewegungsmittels beziehungsweise einen Ladedruck einer Brennkraftmaschine des Fortbewegungsmittels beziehungsweise eine Kühlmitteltemperatur des Fortbewegungsmittels angezeigt werden. Unterhalb des Primärbildschirms 2 ist eine Infrarot-LED-Leiste 3a als Erfassungseinheit zur Erfassung von Annäherungsgesten eines Anwenders vorgesehen. Unterhalb der Infrarot-LED-Leiste 3a ist eine Fingerleiste 3 als Teil der Erfassungseinheit zur Entgegennahme von Wischgesten des Anwenders vorgesehen.

Unterhalb der Fingerleiste 3 ein berührungsempfindlicher Bildschirm 2a als Beispiel für eine anspruchsgemäße Anzeigeeinheit angeordnet. Sie weist eine geringere Breite und eine geringere Höhe als der Primärbildschirm 2 auf. Eine (nicht dargestellte) berührungsempfindliche Oberfläche ermöglicht eine berührende Eingabe mittels einer Hand 9 eines Anwenders bezüglich vierer Bedienelemente 15, 16, 17, 18, welche zur Aktivierung einer Startunterstützung beziehungsweise einer Innenraumlichtanpassung beziehungsweise einer "Boost"-Funktion beziehungsweise einer Modifikation einer Geräuschkulisse einer Abgasanlage des Fortbewegungsmittels vorgesehen sind. Unterhalb der Bedienelemente 15, 16, 17, 18 werden Heiz-/Klimaumfänge 20 angezeigt.

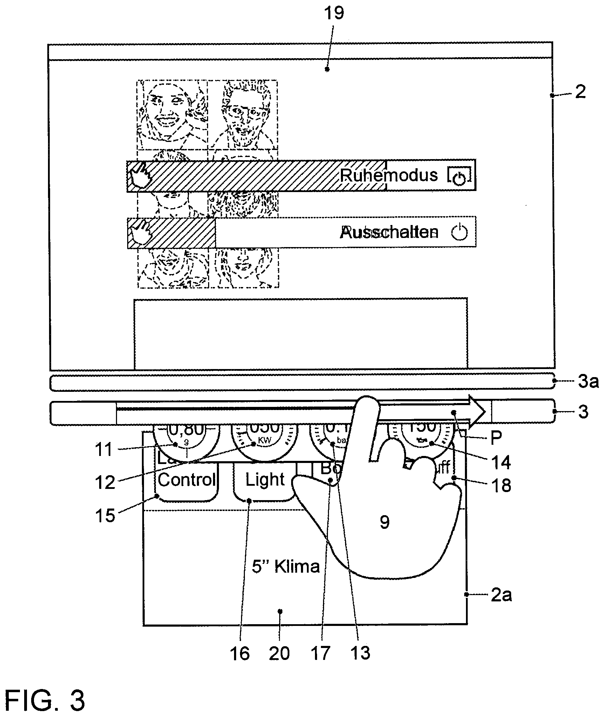

Figur 3 zeigt eine Anwendergeste zur Aktivierung eines Ruhemodus' der in Figur 2 veranschaulichten Anwenderschnittstelle. Eine der Aktivierung des Ruhemodus zugeordnete Wischgeste der Hand 9 des Anwenders in Richtung eines Pfeils P führt dazu, dass die vormals auf dem Primärbildschirm 2 angezeigten Anzeigeelemente 11, 12, 13, 14 nicht mehr auf dem Primärbildschirm 2 angezeigt werden, sondern sich virtuell in Richtung des berührungsempfindlichen Bildschirmes 2a absenken. Mit anderen Worten werden die Anzeigeelemente 11, 12, 13, 14 von oben in den Bildschirminhalt des berührungsempfindlichen Bildschirms 2a "eingeschoben", wobei sie die Bedienelemente 15, 16, 17, 18 überlagern und schließlich ersetzen. Der unterhalb der Bedienelemente 15, 16, 17, 18 angeordnete Klimabedienbereich 20 bleibt auch nach dem Einschieben der Anzeigeelemente 11, 12, 13, 14 sichtbar und bedienbar.

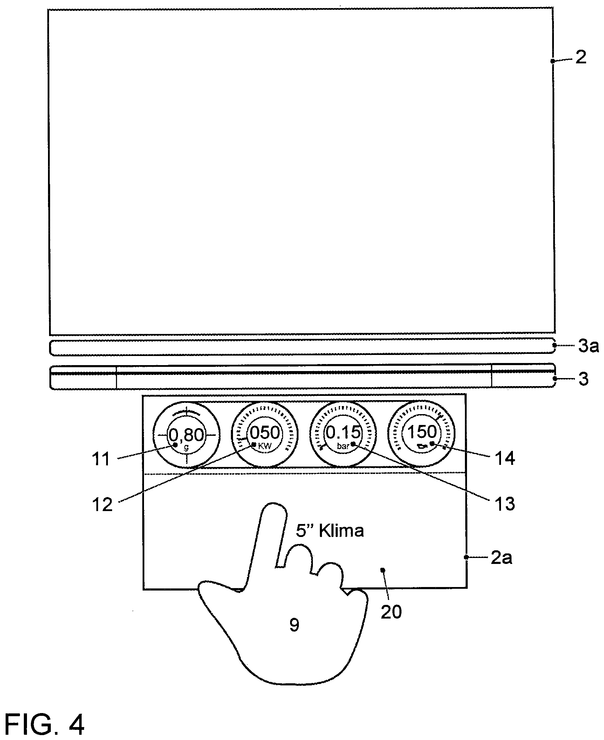

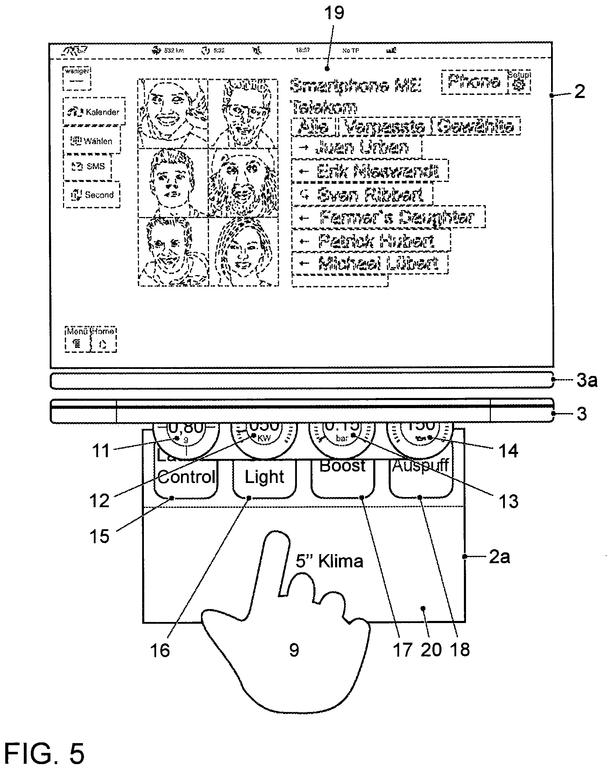

Figur 4 zeigt das Resultat des erfolgreich aktivierten Ruhezustandes, bei welchem die Anzeigeelemente 11, 12, 13, 14 vollständig die Bedienelemente überlagern und optisch ersetzen. Eine erneute Annäherung des Anwenders mit der Hand 9 an die Infrarot-LED-Leiste 3a erzeugt die in Figur 5 gezeigte Darstellung, in welcher der nicht mehr vollständig abgedunkelte Primärbildschirm 2 wieder aktiviert wird.

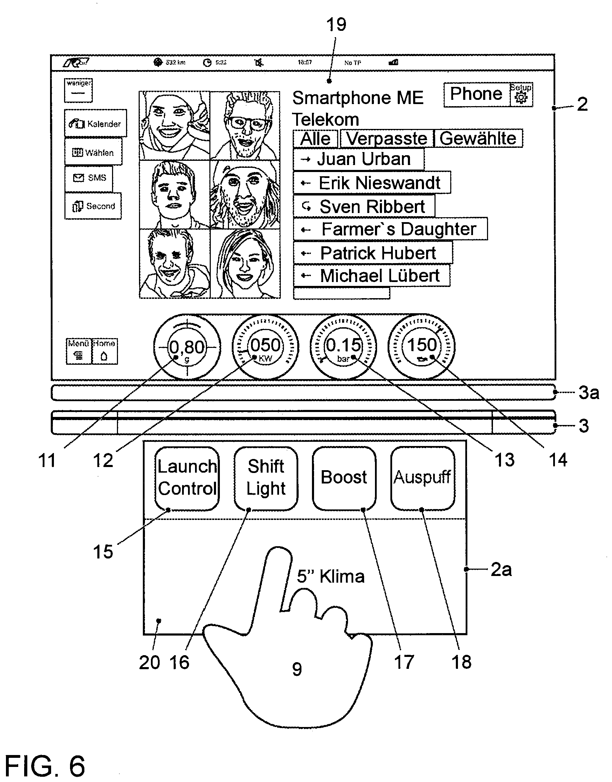

Figur 5 zeigt das Resultat einer erfolgreich erkannten Annäherung einer Hand 9 an die Infrarot-LED-Leiste 3a, im Ansprechen worauf der Primärbildschirm 2 mit einer unscharfen Darstellung unterschiedlicher Funktionsumfänge 19 gefüllt wird. Die vormals vollständig auf dem berührungsempfindlichen Bildschirm 2a dargestellten Anzeigeelemente 11, 12, 13, 14 verschieben sich in Richtung des Primärbildschirmes 2, wobei sie die Bedienelemente 15, 16, 17, 18 auf dem berührungsempfindlichen Bildschirm 2a wieder freigeben. Im Zuge der Reaktivierung des Primärbildschirms 2 wird die in Figur 6 gezeigte Darstellung erzeugt.

In Figur 6 ist der Bildschirminhalt 19 wieder scharf dargestellt und in einem unteren Bereich mit den Anzeigeelementen 11, 12, 13, 14 überlagert. Der berührungsempfindliche Bildschirm 2a zeigt nun wieder vollständig die Bedienelemente 15, 16, 17, 18 und den Klimabedienbereich 20. Eine berührende Eingabe mit der Hand 9 des Anwenders bezüglich eines der dargestellten Bedienelemente 15, 16, 17, 18 sorgt nun wieder für einen entsprechenden Funktionsaufruf.

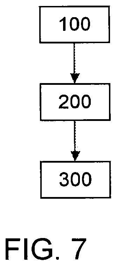

Figur 7 zeigt ein Flussdiagramm veranschaulichend Schritte eines Verfahrens zur hybriden Nutzung einer Anzeigeeinheit eines Fortbewegungsmittels. In Schritt 100 werden Anzeigeelemente repräsentierend einen ersten Informationsumfang auf einer ersten berührungsempfindlichen Anzeigeeinheit eines Fortbewegungsmittels angezeigt. In Schritt 200 wird eine Annäherung eines Anwenders an die erste berührungsempfindliche Anzeigeeinheit erfasst. Dies kann beispielsweise unter Verwendung einer Infrarot-LED-Leiste erfolgen. In Schritt 300 werden Bedienelemente eines Funktionsumfanges, welcher inhaltlich nicht mit dem Informationsumfang der Anzeigeelemente zusammenfällt, anstelle der Anzeigeelemente angezeigt. Nun kann der Anwender, anstatt die Informationsumfänge der Anzeigeelemente optisch zu erfassen, die Funktionsumfänge der Bedienelemente (beispielsweise mittels einer berührenden Eingabe auf einer berührungsempfindlichen Oberfläche der Anzeigeeinheit) bedienen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Primärbildschirm
- 2a: berührungsempfindliche/r Bildschirm/Anzeigeeinheit
- 3: Fingerleiste
- 3a: Annäherungssensorik
- 4: elektronisches Steuergerät
- 5: Datenspeicher
- 6: Lautsprecher
- 7a, 7b: Ambientelichtleisten
- 8a: Fahrersitz
- 8b: Beifahrersitz
- 9: Hand des Anwenders
- 10: PKW
- 11-14: Anzeigeelemente
- 15-18: Bedienelemente
- 19: Bildschirminhalt des Primärbildschirms
- 20: Bedienbereich Heiz-/Klimaumfänge
- 100 bis 300: Verfahrensschritte
- P: Pfeil

## Patentansprüche

1. Verfahren zur hybriden Nutzung einer berührungsempfindlichen Anzeigeeinheit (2a) eines Fortbewegungsmittels (10) umfassend die Schritte
- Anzeigen von Anzeigeelementen (11, 12, 13, 14) auf einer zweiten Anzeigeeinheit (2),
- Versetzen der zweiten Anzeigeeinheit (2) in einen Zustand verringerter Energieaufnahme,
- Entfernen der Anzeigeelemente (11, 12, 13, 14) von der zweiten Anzeigeeinheit (2),
- Anzeigen (100) der Anzeigeelemente (11, 12, 13, 14) repräsentierend einen Informationsumfang auf einer ersten berührungsempfindlichen Anzeigeeinheit (2a),
- Erfassen (200) einer Annäherung eines Anwenders an die erste berührungsempfindliche Anzeigeeinheit (2a) und im Ansprechen darauf
- Anzeigen (300) von Bedienelementen (15, 16, 17, 18) repräsentierend einen Funktionsumfang anstelle der Anzeigeelemente (11, 12, 13, 14) auf der ersten berührungsempfindlichen Anzeigeeinheit (2a), wobei
die Bedienelemente (15, 16, 17, 18) im Gegensatz zu den Anzeigeelementen (11, 12, 13, 14) zur Entgegennahme von Anwenderinteraktionen, welche sich auf einen durch die Bedienelemente (15, 16, 17, 18) repräsentierten Funktionsumfang auswirken, dienen.

2. Anwenderschnittstelle zur hybriden Nutzung einer berührungsempfindlichen Anzeigeeinheit (2a) eines Fortbewegungsmittels (10) umfassend
- eine erste berührungsempfindliche Anzeigeeinheit (2a), welche eingerichtet ist, Anzeigeelemente (11, 12, 13, 14) repräsentierend einen ersten Informationsumfang anzuzeigen,
- eine Erfassungseinheit (3), welche eingerichtet ist, eine Annäherung eines Anwenders an die erste berührungsempfindliche Anzeigeeinheit (2a) zu erfassen, und
- eine Auswerteeinheit (4), welche eingerichtet ist, im Ansprechen auf eine mittels der Erfassungseinheit (3) erfasste Annäherung des Anwenders
- Bedienelemente (15, 16, 17, 18) eines Funktionsumfangs anstelle der Anzeigeelemente (11, 12, 13, 14) repräsentierend den ersten Informationsumfang auf der ersten berührungsempfindlichen Anzeigeeinheit (2a) anzuzeigen,
wobei die Bedienelemente (15, 16, 17, 18) im Gegensatz zu den Anzeigeelementen (11, 12, 13, 14) zur Entgegennahme von Anwenderinteraktionen, welche sich auf einen durch die Bedienelemente (15, 16, 17, 18) repräsentierten Funktionsumfang auswirken, dienen, weiter umfassend eine zweite Anzeigeeinheit (2), welche eingerichtet ist, in einen Energiesparmodus versetzt zu werden, wobei die Auswerteeinheit (4) eingerichtet ist, die Anzeigeelemente (11, 12, 13, 14) zunächst auf der zweiten Anzeigeeinheit (2) anzuzeigen und die Anzeigeelemente (11, 12, 13, 14) bei Versetzen der zweiten Anzeigeeinheit in den Energiesparmodus stattdessen auf der ersten berührungsempfindlichen Anzeigeeinheit (2a) anzuzeigen.

3. Anwenderschnittstelle nach Anspruch 2, wobei der Informationsumfang der Anzeigeelemente (11, 12, 13, 14) anderen Funktionen und/oder Zustandsgrößen des Fortbewegungsmittels (10) zugeordnet ist als der Funktionsumfang der Bedienelemente (15, 16, 17, 18).

4. Anwenderschnittstelle nach einem der Ansprüche 2 oder 3, wobei die Anzeigeelemente (11, 12, 13, 14) nach Art einzelner, insbesondere analoger, Armaturen dargestellt werden.

5. Anwenderschnittstelle nach einem der Ansprüche 2 bis 4, wobei die Anzeigeelemente (11, 12, 13, 14)
- einer Kompassfunktion, und/oder
- einer Temperaturanzeige, und/oder
- einer Beschleunigungsanzeige, und/oder
- einem Ladedruck, und/oder
- einer Kühlwassertemperaturanzeige
zugeordnet sind.

6. Anwenderschnittstelle nach einem der Ansprüche 2 bis 5, wobei die Bedienelemente (15, 16, 17, 18)
- einer Klimabedienfunktion, und/oder
- einer Sitzeinstellung, und/oder
- einer Einstellung einer Abgasanlage, und/oder
- einem Antriebstrangprogramm, und/oder
- einem Getriebeprogramm, und/oder
- einer Beleuchtungsfunktion
zugeordnet sind.

7. Anwenderschnittstelle nach einem der Ansprüche 2 bis 6, wobei die Bedienelemente (15, 16, 17, 18)
- Ein-/Aus-Schaltflächen, und/oder
- Inkrementier- und Dekrementier-Schaltflächen, und/oder
- einen Schieberegler
umfassen.

8. Computerprogrammprodukt umfassend Instruktionen, welche, wenn Sie auf einer programmierbaren Auswerteeinheit (4) einer Anwenderschnittstelle (1) nach einem der Ansprüche 2 bis 7 ausgeführt werden, die Auswerteeinheit (4) veranlassen, die Schritte eines Verfahrens nach Anspruch 1 durchzuführen.

9. Signalfolge repräsentierend Instruktionen, welche, wenn Sie auf einer programmierbaren Auswerteeinheit (4) einer Anwenderschnittstelle (1) nach einem der Ansprüche 2 bis 7 ausgeführt werden, die Auswerteeinheit (4) veranlassen, die Schritte eines Verfahrens nach Anspruch 1 durchzuführen.

10. Fortbewegungsmittel umfassend eine Anwenderschnittstelle nach einem der Ansprüche 2 bis 7.

## Claims

1. Method for hybrid use of a touch-sensitive display unit (2a) of a means of transport (10) comprising the following steps:
- displaying display elements (11, 12, 13, 14) on a second display unit (2),
- setting the second display unit (2) to a state of reduced energy consumption,
- removing the display elements (11, 12, 13, 14) from the second display unit (2),
- displaying (100) the display elements (11, 12, 13, 14) representing an amount of information on a first touch-sensitive display unit (2a),
- detecting (200) the approach of a user to the first touch-sensitive display unit (2a) and, in response thereto,
- displaying (300) control elements (15, 16, 17, 18) representing a range of functions in place of the display elements (11, 12, 13, 14) on the first touch-sensitive display unit (2a), wherein
- in contrast to the display elements (11, 12, 13, 14), the control elements (15,16,17,18) serve to receive user interactions, which affect a range of functions represented by the control elements (15,16,17,18).

2. User interface for the hybrid use of a touch-sensitive display unit (2a) of a means of transport (10) comprising
- a first touch-sensitive display unit (2a) which is designed to display display elements (11, 12, 13, 14) representing a first amount of information,
- a detection unit (3) which is designed to detect the approach of a user to the first touch-sensitive display unit (2a), and
- an evaluation unit (4), which is designed, in response to the approach of a user detected by means of the detection unit (3),
- to display the first amount of information on the first touch-sensitive display unit (2a) of a range of functions represented by the control elements (15, 16, 17, 18) instead of the display elements (11, 12, 13, 14),
- wherein, in contrast to the display elements (11, 12, 13, 14), the control elements (15,16,17,18) serve to receive user interactions, which affect a range of functions represented by the control elements (15,16,17,18),
- further comprising a second display unit (2), which is designed to be set in an energy-saving mode, wherein the evaluation unit (4) is designed to display the display elements (11, 12, 13, 14) first on the second display unit (2) and to display the display elements (11, 12, 13, 14) instead on the first touch-sensitive display unit (2a) by setting the second display unit in the energy saving mode.

3. User interface according to claim 2, wherein the amount of information of the display elements (11, 12, 13, 14) is related to other functions and/or state variables of the means of transport (10) than the range of functions of the control elements (15,16,17,18).

4. User interface according to one of claims 2 or 3, wherein the display elements (11, 12, 13, 14) are shown in the manner of individual, in particular analog, display elements.

5. User interface according to one of claims 2 to 4, wherein the display elements (11,12,13,14) represent:
- a compass function, and/or
- a temperature display, and/or
- an acceleration display, and/or
- a boost pressure, and/or
- a cooling water temperature gauge.

6. User interface according to one of claims 2 to 5, wherein the operating elements (15, 16, 17, 18) represent:
- a climate control function, and/or
- a seat adjustment, and/or
- the adjustment of an exhaust system, and/or
- a powertrain program, and/or
- a transmission program, and/or
- a lighting function.

7. User interface according to one of claims 2 to 6, wherein the operating elements (15, 16, 17, 18) comprise:
- on/off switch area, and/or
- increment and decrement switch areas, and/or
- a slide control.

8. Computer program product comprising instructions which, when executed on a programmable evaluation unit (4) of a user interface (1) according to one of claims 2 to 7, cause the evaluation unit (4) to perform the steps of a method according to claim 1.

9. Signal sequence representing instructions which, when executed on a programmable evaluation unit (4) of a user interface (1) according to one of claims 2 to 7, cause the evaluation unit (4) to perform the steps of a method according to claim 1.

10. Means of transport comprising a user interface according to one of claims 2 to 7.

## Revendications

1. Procédé d'utilisation hybride d'une unité d'affichage (2a) tactile d'un moyen de locomotion (10), comprenant les étapes
- affichage d'éléments d'affichage (11, 12, 13, 14) sur une deuxième unité d'affichage (2),
- transfert de la deuxième unité d'affichage (2) vers un état de consommation d'énergie réduite,
- enlèvement des éléments d'affichage (11, 12, 13, 14) à partir de la deuxième unité d'affichage (2),
- affichage (100) des éléments d'affichage (11, 12, 13, 14) représentant un ensemble d'informations sur une première unité d'affichage (2a) tactile,
- détection (200) d'une approche d'un utilisateur en direction de la première unité d'affichage (2a) tactile et, en réaction à cela,
- affichage (300) d'éléments de commande (15, 16, 17, 18) représentant un ensemble de fonctions en lieu et place des éléments d'affichage (11, 12, 13, 14) sur la première unité d'affichage (2a) tactile,
où, à la différence des éléments d'affichage (11, 12, 13, 14), les éléments de commande (15, 16, 17, 18) servent à la réception d'interactions avec l'utilisateur qui se répercutent sur un ensemble de fonctions représenté par les éléments de commande (15, 16, 17, 18).

2. Interface utilisateur destinée à l'utilisation hybride d'une unité d'affichage (2a) tactile d'un moyen de locomotion (10), comprenant
- une première unité d'affichage (2a) tactile qui est agencée pour afficher des éléments d'affichage (11, 12, 13, 14) présentant un premier ensemble d'informations,
- une unité de détection (3) qui est agencée pour détecter une approche d'un utilisateur en direction de la première unité d'affichage (2a) tactile et,
- une unité d'analyse (4) qui est agencée pour, en réaction à une approche de l'utilisateur détectée au moyen de l'unité de détection (3),
- afficher des éléments de commande (15, 16, 17, 18) d'un ensemble de fonctions en lieu et place des éléments d'affichage (11, 12, 13, 14) représentant le premier ensemble d'informations sur la première unité d'affichage (2a) tactile,
où, à la différence des éléments d'affichage (11, 12, 13, 14), les éléments de commande (15, 16, 17, 18) servent à la réception d'interactions avec l'utilisateur qui se répercutent sur un ensemble de fonctions représenté par les éléments de commande (15, 16, 17, 18),
comprenant également une deuxième unité d'affichage (2) qui est agencée pour être transférée vers un mode d'économie d'énergie, l'unité d'analyse (4) étant agencée pour afficher les éléments d'affichage (11, 12, 13, 14) d'abord sur la deuxième unité d'affichage (2) et pour, lors du transfert de la deuxième unité d'affichage (2) dans le mode d'économie d'énergie, afficher les éléments d'affichage (11, 12, 13, 14) au lieu de cela sur la première unité d'affichage (2a) tactile.

3. Interface utilisateur selon la revendication 2, l'ensemble d'informations des éléments d'affichage (11, 12, 13, 14) étant affecté à d'autres fonctions et/ou grandeurs d'état du moyen de locomotion (10) que l'ensemble de fonctions des éléments de commande (15, 16, 17, 18).

4. Interface utilisateur selon l'une des revendications 2 ou 3, les éléments d'affichage (11, 12, 13, 14) étant représentés à la façon de différents tableaux de bord, en particulier analogiques.

5. Interface utilisateur selon l'une des revendications 2 à 4, les éléments d'affichage (11, 12, 13, 14) étant affectés
- à une fonction de boussole, et/ou
- à un affichage de température, et/ou
- à un affichage d'accélération, et/ou
- à une pression de charge, et/ou
- à un affichage de température de l'eau de refroidissement.

6. Interface utilisateur selon l'une des revendications 2 à 5, les éléments de commande (15, 16, 17, 18) étant attribués
- à une fonction de commande de la climatisation, et/ou
- à un réglage de siège, et/ou
- à un réglage d'un système de gaz d'échappement, et/ou
- à un programme de chaîne cinématique, et/ou
- à un programme de transmission, et/ou
- à une fonction d'éclairage.

7. Interface utilisateur selon l'une des revendications 2 à 6, les éléments de commande (15, 16, 17, 18) comprenant
- des boutons marche/arrêt, et/ou
- des boutons d'incrémentation et de décrémentation et/ou
- un curseur de réglage.

8. Produit de programme d'ordinateur, comprenant des instructions qui, quand elles sont exécutées sur une unité d'analyse (4) programmable d'une interface utilisateur (1) selon l'une des revendications 2 à 7, amènent l'unité d'analyse (4) à exécuter les étapes d'un procédé selon la revendication 1.

9. Suite de signaux représentant des instructions qui, quand elles sont exécutées sur une unité d'analyse (4) programmable d'une interface utilisateur (1) selon l'une des revendications 2 à 7, amènent l'unité d'analyse (4) à exécuter les étapes d'un procédé selon la revendication 1.

10. Moyen de locomotion, comprenant une interface utilisateur selon l'une des revendications 2 à 7.
